# EUROPEAN PATENT SPECIFICATION

(11) **EP 2 592 746 B1**
(45) Date of publication and mention of the grant of the patent: **13.09.2017**
(21) Application number: 11803343.0
(22) Date of filing: 07.07.2011
(51) Int. Cl.: H02M 7/12, H02M 1/42

(54) **RECTIFIER DEVICE**
UMRICHTER-VORRICHTUNG
DISPOSITIF REDRESSEUR

(30) Priority: 08.07.2010 JP 2010155652
(43) Date of publication of application: 15.05.2013
(73) Proprietor: Panasonic Corporation, Kadoma-shi Osaka 571-8501 (JP)
(72) Inventor: YOSHIDA, Izumi, Osaka 540-6207 (JP); DOYAMA, Yoshiaki, Osaka 540-6207 (JP); KYOGOKU, Akihiro, Osaka 540-6207 (JP); KAWASAKI, Tomohiro, Osaka 540-6207 (JP)
(74) Representative: Eisenführ Speiser
(86) International application number: PCT/JP2011/003912
(87) International publication number: WO 2012/005006

(56) References cited:
- JP-A- 2003 153 543
- JP-A- 2006 174 689
- JP-A- 2007 129 849
- JP-A- 2010 273 490
- US-A1- 2007 103 947
- US-A1- 2008 130 336

## Description

### TECHNICAL FIELD

The present invention relates to an apparatus for rectifying an AC power from a single-phase alternate current (AC) power source at home or the like into a substantial direct current, and an apparatus for driving an electric motor at variable speed by reconverting obtained direct current into an alternating current with an arbitrary frequency by an inverter circuit. The present invention relates to an apparatus for configuring, for example, a heat pump by compressing a refrigerant by a compressor for application of cooling, heating or freezing foods and the like. The present invention relates to highly efficient drive control of a technology to reduce a load of an electric power transmission system by reducing harmonic components included in a power current flowing in such apparatuses, and improving a power factor upon driving a direct current (DC) load.

### BACKGROUND ART

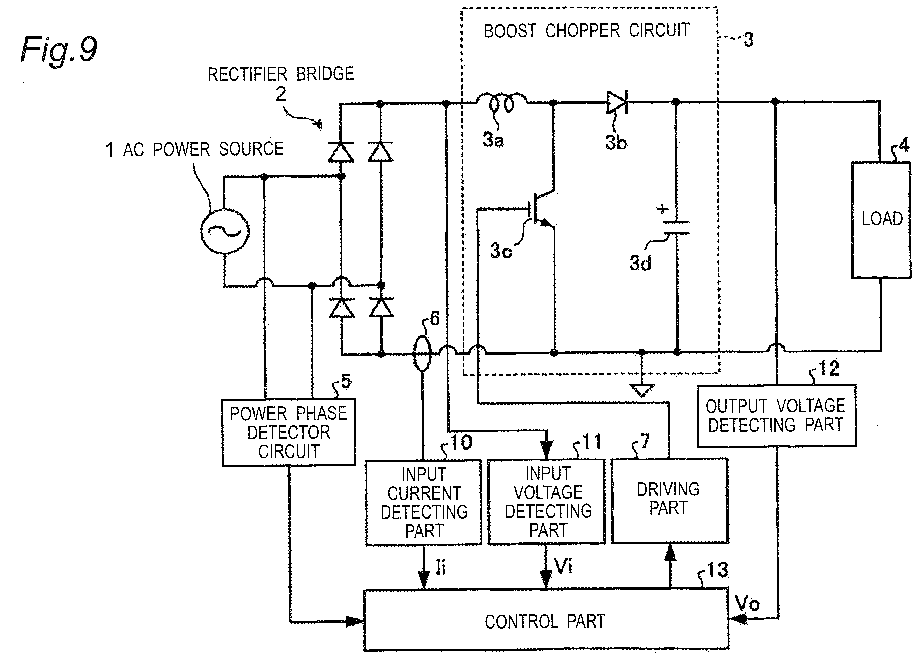

Conventionally, as shown in, for example, Fig. 9, this kind of rectifier apparatus has such a configuration that a power current flows even for an interval during which an instantaneous voltage of an AC power source 1 is low by short-circuiting the AC power source 1 by a semiconductor switch 3c via a rectifier bridge 2 and a reactor 3a, charging the reactor 3a with a current, and flowing a current through a load 4 by a diode 3b when the semiconductor switch 3c is turned off. With this arrangement, harmonic components of the power current decrease and the power factor is improved. However, since a current flows through the semiconductor switch 3c when the semiconductor switch 3c is turned on and off (hereinafter, referred to as "chopping"), and this leads to a circuit loss. In order to solve this problem, a method for effecting chopping for a specific interval of the AC phase and stopping chopping for the remaining interval instead of consistently effecting chopping of the semiconductor switch 3c is proposed (See, for example, a Patent Document 1).

Fig. 9 shows a conventional active rectifier apparatus described in the Patent Document 1. After rectifying the AC power from the AC power source 1 by the rectifier bridge 2 for conversion into a direct current containing pulses, electric power is supplied to a smoothing capacitor 3d and the load 4 via the reactor 3a and the diode 3b. Further, the rectifier bridge output can be short-circuited by the semiconductor switch 3c via the reactor 3a, and this configures a well-known rectifier apparatus with a power factor improvement function by a boost chopper circuit 3. Control of the boost chopper circuit 3 includes detecting the input current by detecting means 6 and an input current detecting part 10 and performing chopping of the semiconductor switch 3c so that the input current becomes same shape as that of the input voltage waveform (power voltage waveform) detected by an input voltage detecting part 11. Further, the magnitude of the input current is adjusted so that the output voltage becomes a desired voltage.

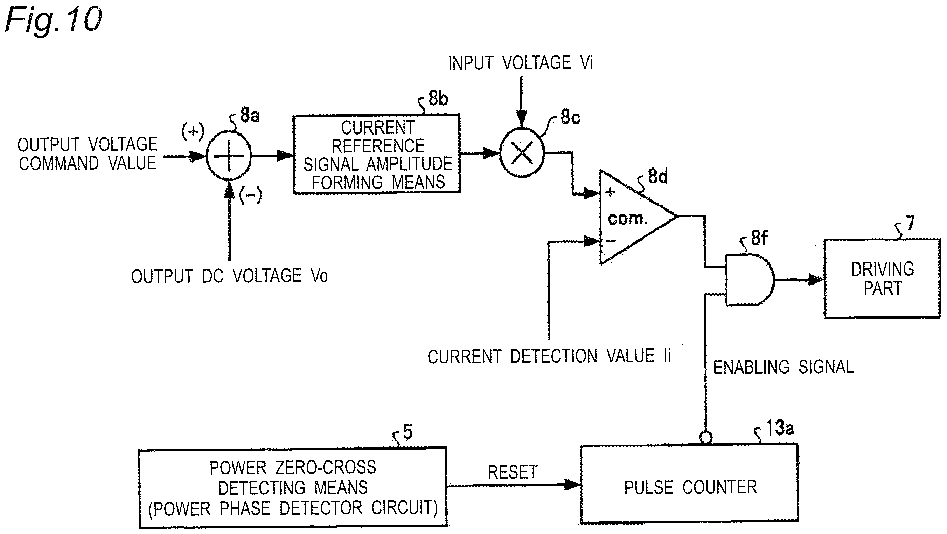

In particular, in the configuration of the Patent Document 1, the apparatus has been proposed for reducing the circuit loss by performing chopping of the semiconductor switch only for a minimum interval during which the harmonics decrease. Fig. 10 is a control block diagram showing a control method for the same proposal. It is designed to detect the phase of the power voltage by power zero-cross detecting means 5, enable chopping of the semiconductor switch 3c of Fig. 9 only for a definite interval by a pulse counter 13a, and turn off the semiconductor switch 3c for the other intervals. With this method, such a rectifier apparatus is actualized that scarcely increases the power harmonics and has a low loss

Moreover, the method of the Patent Document 1 needs a power voltage waveform. Instead of such a method, a method for actualizing similar operation with a predetermined waveform without using the power voltage waveform is also proposed (See, for example, a Patent Document 2). Further, a simple method aiming at a similar effect without a target current waveform is also proposed (See, for example, a Patent Document 3).

### Prior Art Documents:

### Patent Documents:

Patent Document 1: Japanese patent laid-open publication No. JP 2005-253284 A;
Patent Document 2: Japanese patent laid-open publication No. JP 2007-129849 A; and
Patent Document 3: Japanese patent laid-open publication No. JP 2000-224858 A.

However, according to the aforementioned conventional configuration, control is performed so that the output voltage becomes constant on condition that the load is determined, and the interval during which the chopping of the semiconductor switch is also settled. Therefore, if there is an error in the detecting means of the output voltage, the current waveform disadvantageously changes. For example, upon obtaining a direct current of about 280 V by rectifying an alternating current of an effective value of 200 V, the current waveform largely changes even when the DC voltage changes by 1 V. The accuracy of 1 V with respect to the DC voltage of 280 V corresponds to 0.3 %, and resistors of very high accuracy are disadvantageously needed when a low voltage is made by dividing the voltage by the resistors. Therefore, it is required to increase the interval during which the chopping is performed so that the harmonics decrease even in the deformed current waveform taking the detection accuracy of the output voltage into account, and this leads to such a problem that the circuit loss disadvantageously slightly increases.

Moreover, the loss decreases as the output voltage is lower in such a rectifier apparatus. However, when it is tried to set the output voltage to a voltage lower than the instantaneous value of the power voltage, this leads to such a phenomenon that the output voltage disadvantageously rises due to the boost operation for such an interval that the chopping of the semiconductor switch is performed even if the AC voltage for the interval during which the chopping of the semiconductor switch is performed is lower than the output voltage. For the above reasons, there is also such a problem that it is difficult to set a low output voltage with less loss.

US 2008/130336 A1, JP 2006 174689 A and US 2007/103947 A1 disclose each a power supply apparatus including switching means for short-circuiting an AC power supply through a reactor, upon detection of a zero-cross point of the AC power supply.

### DISCLOSURE OF INVENTION

An object of the present invention is to solve the aforementioned conventional problems and provide a rectifier apparatus capable of reducing the power harmonic current not depending on the detection accuracy of the output voltage and also reducing the loss.

In order to solve the aforementioned conventional problems, the rectifier apparatus of the present invention includes means for detecting the phase of the AC voltage, forming a target current waveform depending on the detected phase; means for detecting a current on the AC side or a current flowing from the AC side to the DC side; means for detecting a DC voltage; and means for controlling chopping of a semiconductor switch by adjustment so that the target current waveform and the detected current waveform become same waveform as each other and adjusting the amplitude of the target current waveform so that the DC voltage becomes a desired voltage. This leads to that the desired DC voltage is adjusted so that the phase when the chopping of the semiconductor switch is shifted from a stop state to a start state becomes a desired phase.

Further, the rectifier apparatus includes means for detecting one of two target current waveforms, and a current on the AC side or a current flowing from the AC side to the DC side; means for detecting a DC voltage; and means for controlling chopping of a semiconductor switch by adjustment so that the target current waveform and the detected current become same waveform as each other and adjusting the amplitude of the target current waveform so that the DC voltage becomes a desired voltage, and this leads to that a desired DC voltage is adjusted so that the phase when the chopping of the semiconductor switch is shifted from the stop state to the start state obtained by executing these controls becomes a desired phase. The above-mentioned two target current waveforms have phase relations to the AC voltage waveform at an identical frequency, respectively. One of the two target current waveforms has an interval of monotonous increase or a combination of definite states within an AC phase of 0 to 90 degrees or 180 to 270 degrees, and an interval during which the target value is zero within AC phase intervals of 90 to 180 degrees and 270 to 360 degrees. Another one of the two target current waveforms has an interval of monotonous increase or a combination of definite states from a desired chopping start phase of the semiconductor switch to a phase when the end of chopping is possibly included within an AC phase of 0 to 90 degrees or 180 to 270 degrees, and an interval during which the target value is zero within AC phase intervals of 90 to 180 degrees and 270 to 360 degrees.

With this arrangement, the DC voltage is relatively adjusted to a proper value to have a similar current waveform even if the detection accuracy of the DC voltage has an error, and therefore, the rectification operation capable of reducing the loss and having a little harmonic current is achieved.

The rectifier apparatus of the present invention is able to achieve the rectification operation capable of reducing the loss and having a little harmonic current.

### BRIEF DESCRIPTION OF DRAWINGS

These and other aspects and features of the present invention will become clear from the following description taken in conjunction with the preferred embodiments thereof with reference to the accompanying drawings, in which:
Fig. 1 is a circuit block diagram showing an overall circuit configuration of a first embodiment of the present invention;
Fig. 2 is a control block diagram showing an internal processing of the control circuit of Fig. 1;
Fig. 3 is a waveform chart showing a principle of operation of a second embodiment of the present invention;
Fig. 4 is a waveform chart showing exemplified target current waveforms usable in the second embodiment of the present invention;
Fig. 5 is a waveform chart showing a power phase detection principle of first to fourth embodiments of the present invention;
Fig. 6 is a circuit block diagram showing an overall circuit configuration of a third embodiment of the present invention;
Fig. 7 is a circuit block diagram showing an overall circuit configuration of a fourth embodiment of the present invention;
Fig. 8 is a waveform chart showing a principle of operation of the first embodiment of the present invention;
Fig. 9 is a circuit block diagram showing an overall circuit configuration of a conventional rectifier apparatus; and
Fig. 10 is a control block diagram showing an internal processing of the control circuit of the conventional rectifier apparatus.

### BEST MODE FOR CARRYING OUT THE INVENTION

The rectifier apparatus of the present invention includes means for detecting the phase of the AC voltage, forming a target current waveform depending on the detected phase; means for detecting a current on the AC side or a current flowing from an AC side to a DC side; means for detecting a DC voltage; and means for controlling chopping of a semiconductor switch by adjustment so that the target current waveform and the detected current waveform become same waveform as each other and adjusting the amplitude of the target current waveform so that the DC voltage becomes a desired voltage, and this leads that the desired DC voltage is adjusted so that the phase when the chopping of the semiconductor switch is shifted from a stop state to a start state becomes a desired phase.

Further, the rectifier apparatus includes means for detecting a current on the AC side or a current flowing from the AC side to the DC side by using either one of first and second target current waveforms; means for detecting a DC voltage; and means for controlling chopping of a semiconductor switch by adjustment so that the target current waveform and the detected current become same waveform as each other and adjusting the amplitude of the target current waveform so that the DC voltage becomes a desired voltage. The first and second target current waveforms have phase relations to the AC voltage waveform at an identical frequency. The first target current waveform has an interval of monotonous increase or a combination of definite states within an AC phase of 0 to 90 degrees or 180 to 270 degrees, and an interval during which the target value is zero within AC phase intervals of 90 to 180 degrees and 270 to 360 degrees or a target current waveform. The second target current waveform has an interval of monotonous increase or a combination of definite states from a desired chopping start phase of the semiconductor switch to a phase when the end of chopping is possibly included within an AC phase of 0 to 90 degrees or 180 to 270 degrees, and an interval during which the target value is zero within AC phase intervals of 90 to 180 degrees and 270 to 360 degrees. This leads to that a desired DC voltage is adjusted so that the phase when the chopping of the semiconductor switch is shifted from the stop state to the start state obtained by executing these controls becomes a desired phase.

With this arrangement, the DC voltage is relatively adjusted to a proper value to have a similar current waveform even if the detection accuracy of the DC voltage has an error, and therefore, the rectification operation capable of reducing the loss and has a little harmonic current is achieved.

Embodiments of the present invention are described below with reference to the drawings. The present invention is not limited by the embodiments.

### FIRST EMBODIMENT

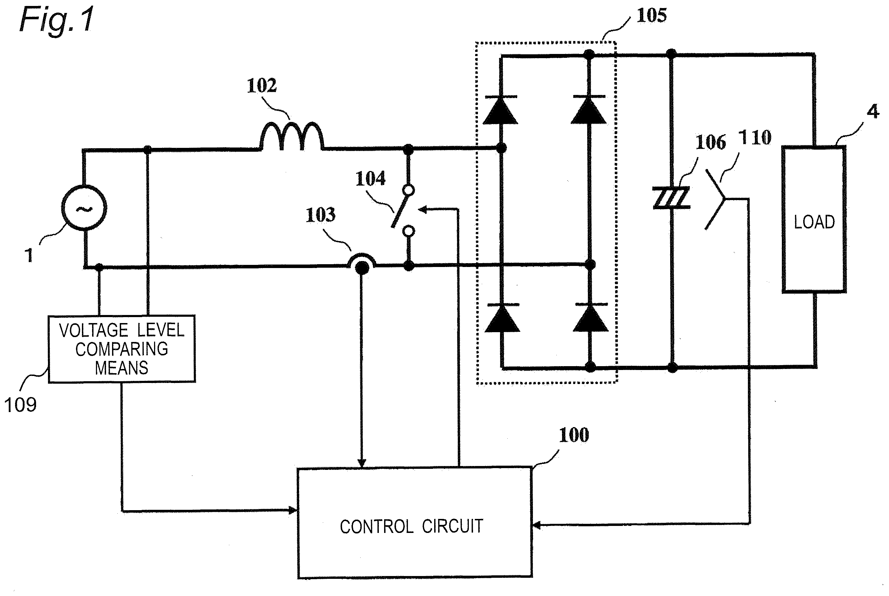

Fig. 1 shows a circuit block diagram showing an overall configuration of a rectifier apparatus in a first embodiment of the present invention.

As shown in Fig. 1, a loop to short-circuit an AC power source 1 by a reactor 102 and a semiconductor switch 104 is configured in the rectifier apparatus. Further, current detecting means 103 is provided so that the current of this loop can be detected, and the detection result is inputted to a control circuit 100. The current of the reactor 102 increases when the AC power source 1 is short-circuited, and the current that has flowed through the reactor 102 is rectified by a diode bridge 105, and is flowed into a smoothing circuit 106 and a load 4 when the semiconductor switch 104 is turned off to drive the load 4. The DC voltage applied to the load 4 is detected by DC voltage detecting means 110, and the detection result is inputted to the control circuit 100. Further, voltage level comparing means 109 to compare the voltage level of the AC power source 1 is provided. The voltage level comparing means 109 obtains a binary value as to whether the voltage level of the AC power source 1 is higher than a definite value, and inputs the information to the control circuit 100.

The control circuit 100 detects the phase of the AC power source 1 from the information as to whether the voltage of the AC power source 1 is higher than a definite voltage level to generate a target current waveform, and performs chopping of the semiconductor switch 104 so that the detection result in the current detecting means 103 becomes asymptotically closer to a similar shape of the target current waveform. Further, the homothetic ratio of the target current waveform is adjusted by the control circuit 100 in accordance with the deviation so that the voltage information of the DC voltage detecting means 110 becomes the desired voltage internally owned by the control circuit. That is, if the actual DC voltage is lower than the desired voltage, the homothetic ratio of a target current command is increased to perform control to make a large current. If the actual DC voltage is higher than the desired DC voltage, control is performed to make a small current. Further, the control circuit 100 examines the AC voltage phase when the chopping of the semiconductor switch 104 has shifted from the stop state to the start state from the state of chopping, examines whether the phase has the desired value, and adjusts the desired DC voltage value in accordance with the deviation to the desired value.

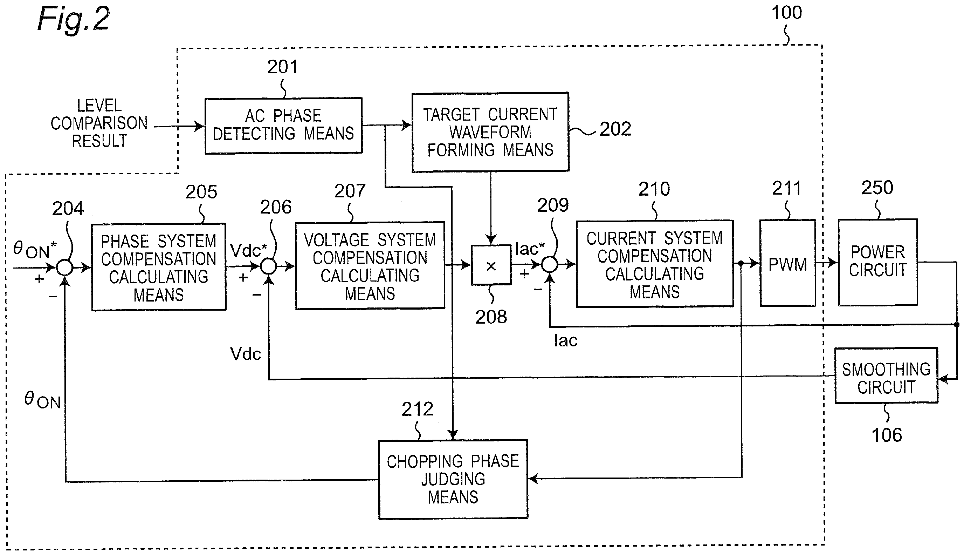

Fig. 2 is a block diagram showing a flow of the control information in the control circuit 100 of Fig. 1. The final control target of the system is to control a phase (θ_{ON}*) at the shift from the chopping stop state to the chopping start state to the desired value. First of all, the AC phase is detected by AC phase detecting means 201 on the basis of information obtained by binarizing the voltage level of the AC power source. A concrete method example of the AC phase detecting means 201 is described later. A target current waveform is generated by target current waveform forming means 202 on the basis of the obtained AC phase information, and the information is inputted to a multiplier 208. The details of the target current waveform are described later. On the other hand, in comparing means 204, the phase information at the time of the shift from the chopping stop state to the chopping start state is compared with the actual turning-on AC phase information detected by chopping judging means 212 according to the desired turning-on AC phase information (θ_{ON}*) and the semiconductor switch chopping information.

The phase excursion of the comparison result is sent to compensation calculating means 205 for phase control, and compensation calculation to keep stable the phase at the time of the shift to the chopping start state is performed. The compensation calculation result becomes a command voltage (Vdc*) of the output voltage, and sent to comparing means 206. The comparing means 206 performs comparison with the actual output voltage, and sends a voltage deviation of the comparison result to compensation calculating means 207 of a voltage system for DC voltage control. In the compensation calculating means 207 of the voltage system, a compensation calculation to achieve coincidence of the actual voltage with the command voltage (Vdc*) and stable operation is executed. The compensation calculation result is sent to the multiplier 208, and multiplication with the target current waveform is performed. That is, the amplitude of the target current waveform is increased when the actual voltage is lower than the command voltage or reduced in the opposite case. The output result of the multiplier 208 is sent as an instantaneous current command (Iac*) to comparing means 209.

The comparing means 209 compares the instantaneous current command (Iac*) with the actual current value, and sends a current deviation of the comparison result to compensation calculating means 210 of a current system. In the compensation calculating means 210 of the current system, compensation calculation is performed so that the current coincides with a command value stably and promptly. The compensation calculation result is sent to PWM means 211, and converted into ON/OFF information for the semiconductor switch. Further, the compensation calculation result is sent to chopping phase judging means 212 to detect the phase information of the shift from the chopping stop state to the chopping start state, and the detected phase information is sent to the phase comparing means 204, and this configures a phase control loop.

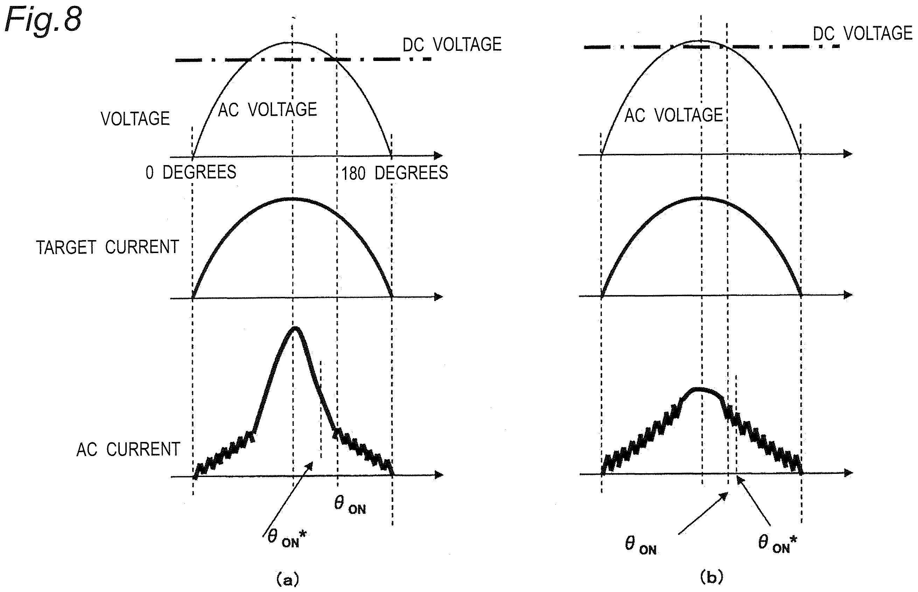

Fig. 8 describes the control operation in waveforms. In Fig. 8, the waveforms in the upper row indicate a relative relation between the AC voltage and the DC voltage, the waveforms in the middle row indicate the target current waveforms, and the waveforms in the lower row indicate the actual current waveforms. Fig. 8(a) shows a case where the output voltage is low, and a phase (θ_{ON}) when the chopping of the semiconductor switch has shifted to the start state is delayed from the desired phase (θ_{ON}*). In this case, since a phase interval during which the AC voltage is higher than the DC voltage increases, a current flowing from the AC power source to the DC side via the reactor and the diode increases. Therefore, the current waveform becomes peaky, and the harmonic components of the current increases.

On the other hand, Fig. 8(b) shows a case where the output voltage is high, and the phase (θ_{ON}) when the chopping of the semiconductor switch has shifted to the start state is advanced from the desired phase (θ_{ON}*). In this case, since the phase interval during which the AC voltage is higher than the DC voltage decreases, the current flowing from the AC power source to the DC side via the reactor and the diode also decreases, and the harmonic components of the current decreases. It is noted that the interval during which the chopping of the semiconductor switch is performed increases in Fig. 8(b), and therefore, the circuit loss slightly increases as compared with the waveform in Fig. 8(a).

It is noted that, if distortions are contained in the AC power source, it is sometimes a case where the phase information of the shift from the chopping stop state to the chopping start state occurs several times during a half cycle of the AC power source. In the case, stable control can be performed by selecting a phase closer to the AC power source phase of 90 degrees or 270 degrees. Moreover, a similar effect can also be obtained by selecting the phase closer to the phase when the instantaneous value of the AC current is maximized instead of the AC power source phase of 90 degrees or 270 degrees.

### SECOND EMBODIMENT

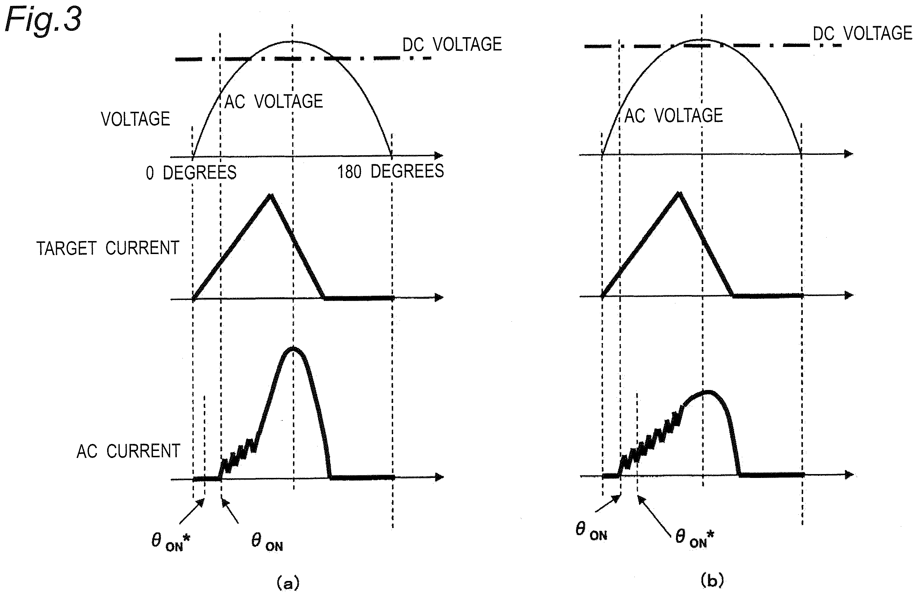

Next, the rectifier apparatus of the second embodiment of the present invention is described with reference to Fig. 3. Fig. 3 is a waveform chart showing a principle of operation of a method capable of reducing the loss by making a waveform other than the sine wave as the target current waveform. In particular, the harmonic current itself is a little even if the waveform distortions increase when the load is light, and therefore, it is possible to further reduce the loss. In Fig. 3, the waveforms in the upper row indicate a relative relation between the AC voltage and the DC voltage, the waveforms in the middle row indicate the target current waveform, and the waveforms in the lower row indicate the actual current waveforms. Fig. 3(a) shows a case where the output voltage is low, and the phase (θ_{ON}) when the chopping of the semiconductor switch has shifted to the start state is delayed from the desired phase (θ_{ON}*). In this case, since the phase interval during which the AC voltage is higher than the DC voltage increases, the current flowing from the AC power source to the DC side via the reactor and the diode increases. Therefore, the current waveform becomes peaky, and the harmonic components of the current increases.

On the other hand, Fig. 3(b) shows a case where the output voltage is high, and the phase (θ_{ON}) when the chopping of the semiconductor switch has shifted to the start state is advance from the desired phase (θ_{ON}*). In this case, since the phase interval during which the AC voltage is higher than the DC voltage decreases, the current flowing from the AC power source to the DC side via the reactor and the diode also decreases, and the harmonic components of the current decreases. It is noted that the interval during which the chopping of the semiconductor switch is performed increases, and therefore, the circuit loss disadvantageously slightly increases in Fig. 3(b) as compared with the waveform in Fig. 3(a).

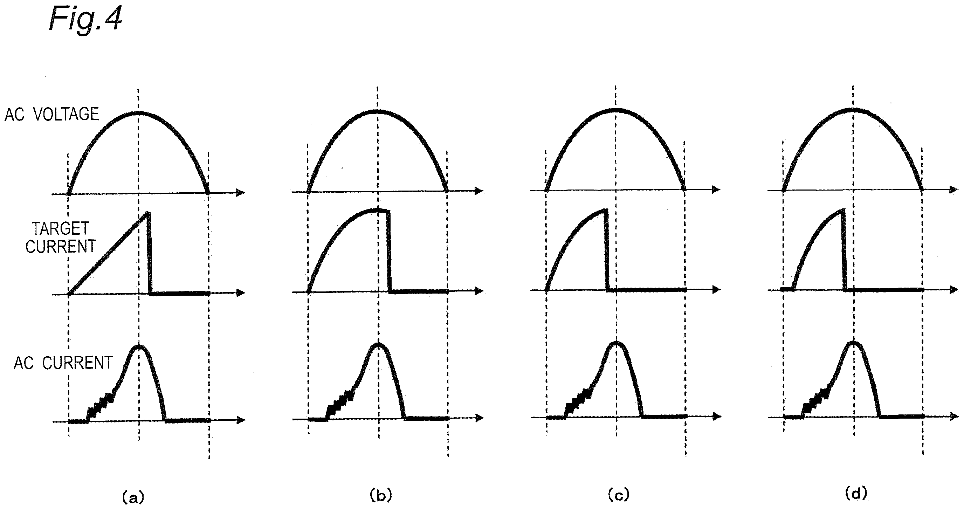

A waveform that rises in the first half of the 180-degree interval and has an interval during which the current becomes zero in the last half is used as the target current waveform. For example, in the middle row of Fig. 3, a waveform that monotonously increases for the first half of the 180-degree interval, contrariwise starts decreasing slightly before 90 degrees, and includes an interval during which the current becomes zero in the last half is shown. With this regard, Fig. 4 shows other waveform examples. Fig. 4(a) shows a waveform that has an interval during which the current instantaneously becomes zero in place of the monotonous decrease interval as compared with the waveform shown in the middle row of Fig. 3. Fig. 4(b) shows a waveform that has a monotonous increase interval sinusoidally increasing, and an interval during which the current becomes zero in the last half. Further, as shown in Fig. 4(c), it is also possible to provide a constraint condition and to make the current zero before 90 degrees. Moreover, as shown in Fig. 4(d), it is also possible to make the current zero for a while from zero degrees and to make a monotonous increase afterwards.

Although the target current is made zero before 90 degrees in Figs. 4(c) and 4(d), it is similarly usable if a desired phase when the chopping starts from the chopping stop of the semiconductor switch before the phase when the current is made zero is provided. Furthermore, since the DC voltage is lower than the maximum instantaneous voltage in the present operation, the power current continues flowing for a while even if the target current becomes zero due to the current flow from the power source via the reactor and the diode in the vicinity of 90 degrees, and therefore, a current having a little harmonic components can be achieved with high efficiency.

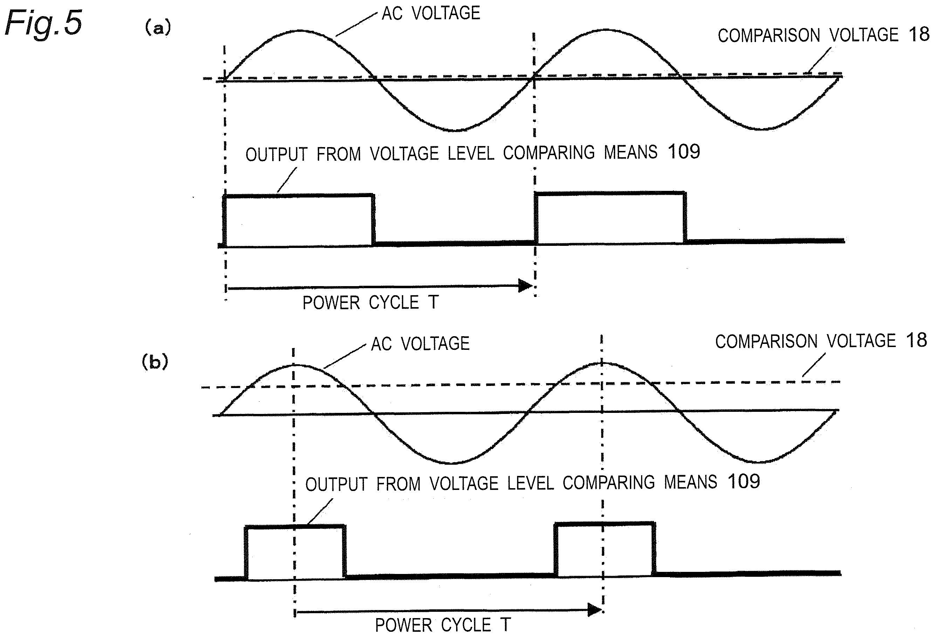

Fig. 5 shows waveforms indicating a method for detecting the voltage phase from information as to whether the AC voltage is higher than a definite level. The information is obtained as a binary signal as to whether the instantaneous voltage of the AC voltage is exceeding a threshold value. The cycle of the binary signal is same as the power frequency if the threshold value fluctuates, and the time when the AC voltage phase is at 90 degrees or 270 degrees can be known if a midpoint on the Hi side or the Lo side of the binary signal is obtained. Moreover, the midpoint between 90 degrees and 270 degrees is located at the phases of 180 degrees and zero degrees.

If the thus-obtained information is multiplied (the frequency is converted into a frequency multiplied by n (where n is a natural number)) by using a PLL or the like, the phase at every instant can be known. For example, one pulse becomes one degree when the frequency is multiplied by 360, and phase information in degree units can be obtained when the pulses are counted. Then, it is proper to call up the target current waveform at every instant by the obtained phase information. Another method for detecting the phase by using binary information obtained by level comparison is also proposed in, for example, the document of Japanese patent laid-open publication No. JP 2001-45763 A that includes the same inventor, and it is not specifically limited.

By using the present embodiment, if an error is contained in the detection accuracy of the DC voltage, the DC voltage is relatively adjusted so that the phase when the chopping stop state shifts to the chopping start state becomes the desired phase. Therefore, such a rectification operation can be achieved that produces a similar current waveform, allows the loss to be reduced, and has a little harmonic current.

### THIRD EMBODIMENT

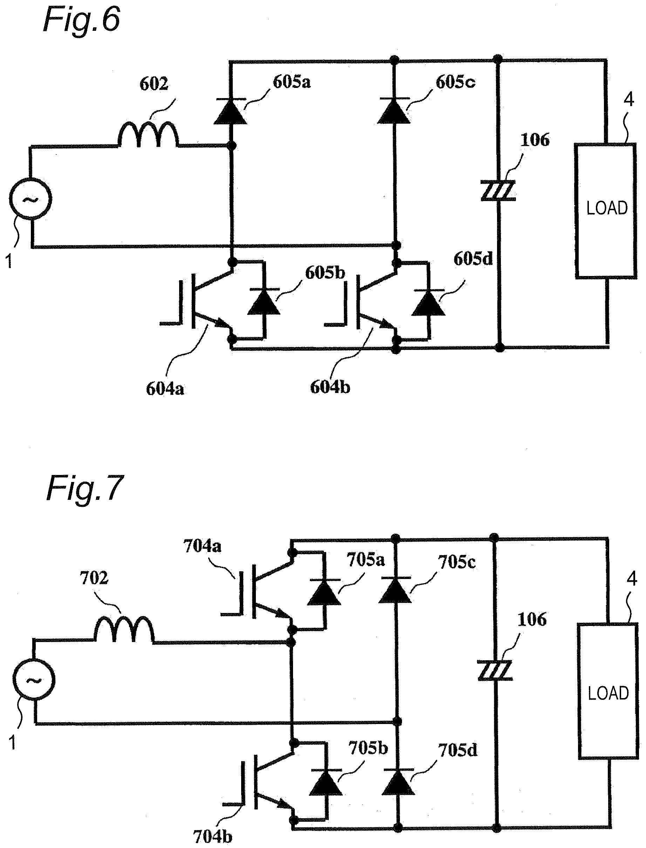

Fig. 6 is a circuit diagram showing a circuit configuration of a rectifier apparatus according to the third embodiment as another basic circuit configuration of the rectifier apparatus of the present invention. The circuit of Fig. 6 is to rectify an AC power from the AC power source 1 by a bridge circuit configured of semiconductor switches 604a and 604b, and diodes 605a, 605b, 605c and 605d via a reactor 602 and to drive the smoothing circuit 106 and the load 4. The control method is the same as that of the rectifier apparatus of the first embodiment of Fig. 1, and can be achieved by simultaneously driving two semiconductor switches 604a and 604b.

### FOURTH EMBODIMENT

Fig. 7 is a circuit diagram showing a circuit configuration of a rectifier apparatus according to the fourth embodiment as another basic circuit configuration of the rectifier apparatus of the present invention. The circuit of Fig. 7 is to rectify an AC power from the AC power source 1 by a bridge circuit configured of semiconductor switches 704a and 704b, and diodes 705a, 705b, 705c and 705d via a reactor 702 and to drive the smoothing circuit 106 and the load 4. The control method is the same as that of the rectifier apparatus of the first embodiment of Fig. 1, whereas chopping of only either one of the semiconductor switches is performed according to the polarity of the AC power source.

For example, regarding the polarity of the AC power source, chopping of the semiconductor switch 704b is performed for an interval during which the side where the reactor 702 is connected is higher, and chopping of the semiconductor switch 704a is performed for the interval during which the side where the reactor 702 is connected is lower. In the present embodiment, the DC output is short-circuited when the semiconductor switches 704a and 704b are simultaneously turned on, and therefore, it is sometimes a case where neither semiconductor switch is set to be turned on in the vicinity of polarity inversion of the AC power source. In such a case, the phase when the chopping state shifts to the stop state possibly occurs also in the vicinity of 0 degrees and 180 degrees in Fig. 10. It is noted that the chopping is intentionally stopped to prevent the short-circuit of the DC output in this case, and therefore, it is allowed to easily cope with the case by not handling the phase as a phase when the chopping of the present invention has shifted to the start state.

As a matter relevant in common to all the embodiments, it is sometimes a case where the chopping state instantaneously shifts again to the stop state due to circuit fluctuations and noises at the time of the shift of the chopping state from the stop state to the chopping state, whereas it is allowed to easily cope with this occurrence by not handling the phase as a phase when the chopping of the present invention has shifted to the start state.

Further, although the description has been made by using the phase information of the power voltage as a method for implementing the present invention, it is clear that, when the frequency of the power source is fixed, similar control can be performed with time information on the basis of the information of zero-cross of the AC power source or the like. Likewise, it is also clear that the present invention can be implemented by a method for counting the pulses of a carrier signal such that PWM modulation control can be achieved as one example of chopping methods instead of measuring time.

By properly combining arbitrary embodiments among the aforementioned various embodiments, the effects owned by each of them can be produced.

Although the present invention has been fully described in connection with the preferred embodiments thereof with reference to the accompanying drawings, it is to be noted that various modifications and corrections are apparent to those skilled in the art. It should be appreciated that such modifications and corrections are included within the scope of the present invention unless they depart from the scope of the present invention specified by the appended claims.

The contents disclosed in the specification, drawings and claims for patent of the Japanese Patent Application No. JP 2010-155652 as filed on July 8, 2010 are entirely incorporated into this specification with this reference.

### INDUSTRIAL APPLICABILITY

The rectifier apparatus of the present invention, which can make compatible the suppression of the harmonic current and the reduction of the circuit loss, is therefore also applicable to, for example, the applications of rectifier apparatuses for use in apparatuses that configures a heat pump by compressing a refrigerant by a compressor to perform cooling, heating or freezing of foods and the like.

## Claims

1. A rectifier apparatus having a configuration in which a single-phase AC power source (1) is short-circuited and opened via a reactor (102) by chopping a semiconductor switch (104) to supply a current from an AC side to a DC side via the reactor (102), the rectifier apparatus comprising:
means (202) for forming a target current waveform of same frequency as that of an AC voltage waveform;
means (201) for detecting a current on the AC side or a current on the DC side;
means for detecting a DC voltage;
means (211) for controlling chopping of the semiconductor switch (104) by adjustment so that the target current waveform and the detected current waveform become same shape as each other;
means (206, 207) for adjusting an amplitude of the target current waveform so that the DC voltage becomes a desired voltage; and
means (201) for detecting a phase of the AC voltage;
**characterized in that**
the rectifier apparatus further comprises:
means to shift the semiconductor switch to a chopping start state in a phase interval during which the AC voltage is lower than the DC voltage and the target current waveform is not zero and to shift the semiconductor switch to a chopping stop state in a phase interval during which the AC voltage is higher than the DC voltage; and means (212) for judging a phase (θ_{ON}) when the semiconductor switch (104) starts chopping, based on a detected phase of the AC voltage and a current command adjusted for generating ON/OFF information of chopping of the semiconductor switch (104); and
means (204, 205) for adjusting the DC voltage (Vdc) so that the phase (θ_{ON}) when the semiconductor switch (104) starts chopping becomes a desired phase (θ_{ON}*).

2. The rectifier apparatus as claimed in claim 1,
wherein the target current waveform has an interval of a monotonous increase within an AC phase of 0 to 90 degrees or 180 to 270 degrees, and an interval during which the current is zero within an AC phase of 90 to 180 degrees and 270 to 360 degrees.

3. The rectifier apparatus as claimed in claim 1,
wherein the target current waveform has an interval of a monotonous increase from a desired chopping start phase (θ_{ON}*) of the semiconductor switch (104) to a phase that includes an end of chopping within an AC phase of 0 to 90 degrees or 180 to 270 degrees, and an interval during which the current is zero within an AC phase of 90 to 180 degrees and 270 to 360 degrees.

4. The rectifier apparatus as claimed in any one of claims 1 to 3,
wherein a magnitude correlation between the AC voltage and a definite voltage is detected,
when the AC voltage is equal to or larger than the define voltage, a binary signal having a first value is generated;
while when the AC voltage is smaller than the define voltage, the binary signal having a second value is generated,
the phase of the AC voltage is estimated from the cycle and the phase of an obtained binary signal,
the target current waveform is formed from the estimated phase,
a phase (θ_{ON}) when the semiconductor switch (104) starts chopping is detected on the basis of the estimated phase information, and
the desired phase (θ_{ON}*) is calculated.

5. The rectifier apparatus as claimed in any one of claims 1 to 4,
wherein, when a plurality of phases (θ_{ON}) when the semiconductor switch (104) starts is caused during a half cycle of the AC power source, a phase value is selected and used so as to be closer to the AC power phase of 90 degrees or 270 degrees among from the caused plurality of phases (θ_{ON}).

## Patentansprüche

1. Gleichrichtervorrichtung mit einer Anordnung, in der eine einphasige Wechselstromquelle (1) über eine Drossel (102) kurzgeschlossen und geöffnet wird, indem ein Halbleiterschalter (104) zerhackt, um einen Strom von einer Wechselspannungsseite über die Drossel (102) einer Gleichspannungsseite zuzuführen, wobei die Gleichrichtervorrichtung umfasst:
Mittel (202) zum Bilden einer Ziel-Stromwellenform derselben Frequenz wie die einer Wechselspannungswellenform;
Mittel (201) zum Erfassen eines Stroms auf der Wechselstromseite oder eines Stroms auf der Gleichstromseite;
Mittel zum Erfassen einer Gleichspannung;
Mittel (211) zum Steuern des Zerhackens durch den Halbleiterschalter (104) durch eine derartige Einstellung, dass die Ziel-Stromwellenform und die erfasste Stromwellenform zu derselben Form werden;
Mittel (206, 207) zum Einstellen einer Amplitude der Ziel-Stromwellenform, sodass die Gleichspannung zu einer gewünschten Spannung wird; und
Mittel (201) zum Erfassen einer Phase der Wechselspannung;
**dadurch gekennzeichnet, dass**
die Gleichrichtervorrichtung weiter umfasst:
Mittel zum Verschieben des Halbleiterschalters zu einem Zerhack-Startzustand in einem Phasenintervall, während dessen die Wechselspannung niedriger ist als die Gleichspannung und die Ziel-Stromwellenform nicht Null ist, und zum Verschieben des Halbleiterschalters zu einem Zerhack-Stoppzustand in einem Phasenintervall, während dessen die Wechselspannung höher ist als die Gleichspannung; und
Mittel (212) zum Beurteilen einer Phase (θ_{ON}), wenn der Halbleiterschalter (104) mit dem Zerhacken beginnt, auf Grundlage einer erfassten Phase der Wechselspannung und einer Stromsteuerung, eingestellt zum Erzeugen von EIN-/AUS-Informationen des Zerhackens des Halbleiterschalters (104); und
Mittel (204, 205) zum Einstellen der Gleichspannung (Vdc) so, dass die Phase (θ_{ON}), wenn der Halbleiterschalter (104) mit dem Zerhacken beginnt, zu einer gewünschten Phase (θ_{ON}*) wird.

2. Gleichrichtervorrichtung nach Anspruch 1,
wobei die Ziel-Stromwellenform innerhalb einer Wechselspannungsphase von 0 bis 90 Grad oder 180 bis 270 Grad ein Intervall eines monotonen Anstiegs und innerhalb einer Wechselspannungsphase von 90 bis 180 Grad und 270 bis 360 Grad ein Intervall aufweist, während dessen der Strom Null ist.

3. Gleichrichtervorrichtung nach Anspruch 1,
wobei die Ziel-Stromwellenform innerhalb einer Wechselspannungsphase von 0 bis 90 Grad oder 180 bis 270 Grad ein Intervall eines monotonen Anstiegs von einer gewünschten Zerhack-Startphase (θ_{ON}*) des Halbleiterschalters (104) bis zu einer Phase aufweist, die ein Ende des Zerhackens enthält, und innerhalb einer Wechselspannungsphase von 90 bis 180 Grad und 270 bis 360 Grad ein Intervall aufweist, während dessen der Strom Null ist.

4. Gleichrichtervorrichtung nach einem beliebigen der Ansprüche 1 bis 3,
wobei eine Betragskorrelation zwischen der Wechselspannung und einer festgelegten Spannung erfasst wird,
wenn die Wechselspannung gleich oder größer ist als die festgelegte Spannung, ein binäres Signal mit einem ersten Wert erzeugt wird,
während, wenn die Wechselspannung kleiner ist als die festgelegte Spannung, das binäre Signal mit einem zweiten Wert erzeugt wird,
die Phase der Wechselspannung aus dem Zyklus und der Phase eines erhaltenen binären Signals geschätzt wird,
die Ziel-Stromwellenform aus der geschätzten Phase gebildet wird,
eine Phase (θ_{ON}), wenn der Halbleiterschalter (104) mit dem Zerhacken beginnt, auf Grundlage der geschätzten Phaseninformation erfasst wird, und
die gewünschte Phase (θ_{ON}*) berechnet wird.

5. Gleichrichtervorrichtung nach einem beliebigen der Ansprüche 1 bis 4,
wobei, wenn eine Vielzahl von Phasen (θ_{ON}), wenn der Halbleiterschalter (104) startet, während eines Halbzyklus der Wechselstromquelle bewirkt ist, aus der bewirkten Vielzahl von Phasen (θ_{ON}) ein Phasenwert so gewählt und verwendet wird, dass er näher bei der Wechselstromversorgungsphase von 90 Grad oder 270 Grad liegt.

## Revendications

1. Dispositif formant redresseur ayant une configuration dans laquelle une source (1) de puissance à courant alternatif monophase est mise en court-circuit et ouverte par l'intermédiaire d'une bobine réactance (102) en hachant un commutateur (104) semi-conducteur pour fournir un courant d'un côté à courant alternatif à un côté à courant continu par l'intermédiaire de la bobine réactance (102), le dispositif formant redresseur comportant:
des moyens (202) pour former une forme d'onde de courant cible de même fréquence que celle d'une forme d'onde de tension à courant alternatif;
des moyens (201) pour détecter un courant sur le côté à courant alternatif ou un courant sur le côté à courant continu;
des moyens pour détecter une tension à courant continu;
des moyens (211) pour commander le hachage du commutateur (104) semi-conducteur par ajustement de sorte que la forme d'onde de courant cible et la forme d'onde de courant détecté aient la même forme l'une que l'autre;
des moyens (206, 207) pour ajuster une amplitude de la forme d'onde de courant cible de sorte que la tension à courant continu devient une tension souhaitée; et
des moyens (201) pour détecter une phase de la tension à courant alternatif;
**caractérisé en ce que**
le dispositif formant redresseur comporte en outre:
des moyens pour décaler le commutateur semi-conducteur dans un état de départ de hachage dans un intervalle de phase pendant lequel la tension à courant alternatif est inférieure à la tension à courant continu et la forme d'onde de courant cible n'est pas égale à zéro et pour décaler le commutateur à semi-conducteur dans un état d'arrêt de hachage dans un intervalle de phase pendant lequel la tension à courant alternatif est supérieure à la tension à courant continu; et
des moyens (212) pour juger une phase (θ_{ON}) lorsque le commutateur (104) semi-conducteur commence le hachage sur la base d'une phase détectée de la tension à courant alternatif et d'une instruction de courant ajustée pour produire une information ON/OFF de hachage du commutateur (104) semi-conducteur; et
des moyens (204, 205) pour ajuster la tension (Vdc) à courant continu de sorte que la phase (θ_{ON}), lorsque le commutateur (104) semi-conducteur commence le hachage, devient une phase souhaitée (θ_{ON}*).

2. Dispositif formant redresseur suivant la revendication 1, dans lequel la forme d'onde de courant cible a un intervalle d'accroissement monotone à l'intérieur d'une phase à courant alternatif de 0 à 90 degrés ou de 180 à 270 degrés, et un intervalle pendant lequel le courant est nul à l'intérieur d'une phase à courant alternatif de 90 à 180 degrés et de 270 à 360 degrés.

3. Dispositif formant redresseur suivant la revendication 1, dans lequel la forme d'onde de courant cible a un intervalle d'accroissement monotone d'une phase (θ_{ON}*) de départ de hachage souhaitée du commutateur (104) semi-conducteur jusqu'à une phase qui inclut une fin du hachage à l'intérieur d'une phase à courant alternatif de 0 à 90 degrés ou de 180 à 270 degrés, et un intervalle pendant lequel le courant est nul à l'intérieur d'une phase à courant alternatif de 90 à 180 degrés et de 270 à 360 degrés.

4. Dispositif formant redresseur suivant l'une quelconque des revendications 1 à 3, dans lequel une corrélation d'amplitude entre la tension à courant alternatif et une tension définie est détectée,
lorsque la tension à courant alternatif est égale ou est supérieure à la tension définie, un signal binaire ayant une première valeur est produit;
tandis que lorsque la tension à courant alternatif est plus petite que la tension définie, le signal binaire ayant une deuxième valeur est produit,
la phase de la tension à courant alternatif est estimée à partir du cycle et de la phase d'un signal binaire obtenu,
la forme d'onde de courant cible est formée à partir de la phase estimée,
une phase (θ_{ON}), lorsque le commutateur (104) semi-conducteur commence le hachage, est détectée sur la base de l'information de phase estimée, et
la phase (θ_{ON}*) souhaitée est calculée.

5. Dispositif formant redresseur suivant l'une quelconque des revendications 1 à 4, dans lequel, lorsqu'une pluralité de phases (θ_{ON}) lorsque le commutateur (104) semi-conducteur commence, est créée, pendant un demi-cycle de la source de puissance à courant alternatif, une valeur de phase est sélectionnée et est utilisée de manière à être plus proche de la phase de puissance à courant alternatif de 90 degrés ou 270 degrés parmi la pluralité créée de phases (θ_{ON}).
